Europäisches Patentamt

European Patent Office

Office européen des brevets

(11) Veröffentlichungsnummer: **0 073 977**
**A2**

(12) ## EUROPÄISCHE PATENTANMELDUNG

(21) Anmeldenummer: 82107520.7

(22) Anmeldetag: 18.08.82

(51) Int. Cl.³: **H 04 N 1/46**

(30) Priorität: 27.08.81 DE 3133849
16.04.82 DE 3214125

(43) Veröffentlichungstag der Anmeldung:
16.03.83 Patentblatt 83/11

(84) Benannte Vertragsstaaten:
FR GB IT

(71) Anmelder: **AGFA-GEVAERT Aktiengesellschaft**

**D-5090 Leverkusen 1(DE)**

(72) Erfinder: **Bestenreiner, Friedrich, Dr.**
**Am Düllanger 5**
**D-8022 Grünwald(DE)**

(72) Erfinder: **Stemme, Otto, Dr.**
**Heideckstrasse 29/V**
**D-8000 München 19(DE)**

(54) Aufzeichnungsverfahren zur tonwertrichtigen Wiedergabe von insbesondere farbigen Vorlagen und Vorrichtung zur Durchführung des Verfahrens.

(57) Bei einer Aufzeichnungseinrichtung mit mehreren in Bewegungsrichtung (A) des Aufzeichnungsträgers (1) hintereinander liegenden Reihen von einzeln ansteuerbaren Aufzeichnungselementen (3a-3c) ist zur Erzielung einer möglichst tonwertrichtigen Schwarzweiß- oder Farbabbildung die Farbdeckung der hintereinander liegenden Aufzeichnungselementen in einer geometrischen Reihe zur Basis zwei abgestuft und die Aufzeichnungselemente werden in der Weise angesteuert, daß die analogen Helligkeiten der Bildpunkte des aufzuzeichnenden Bildes gemessen und analog-digital gewandelt werden, und daß jede Ziffer (O, L) der Dualzahl der logarithmierten Helligkeitswerte einer Steuereinrichtung für die hintereinander liegenden, jeweils einem Bildpunkt zugeordneten Aufzeichnungselemente zugeführt wird, welche die Aufzeichnungselemente nach Maßgabe ihrer einem bestimmten Stellenwert innerhalb der die Helligkeit des Bildpunktes wiedergebenden Dualzahl entsprechenden Farbdeckung steuert. Die verschieden große Farbdeckung läßt sich durch einen verschieden großen, wirksamen Querschnitt der Aufzeichnungselemente oder eine verschieden große Dichte der von den Aufzeichnungselementen aufgetragenen Farbe, oder durch verschieden großen Energieeinsatz in diesen Aufzeichnungselementen erzeugen. Als Aufzeichnungselemente kommen u.a. Farbspritzdüsen, Thermodruckelemente und elektrografische Aufzeichnungsanordnungen in Frage.

./...

Fig. 1

AGFA-GEVAERT AG LEVERKUSEN
Camera-Werk München
Patent- und Lizenzwesen

CW 2655.1 PB/MB                    **16. April 1982**
                                   51-bg-se, 0743C


Aufzeichnungsverfahren zur tonwertrichtigen Wiedergabe von insbesondere
farbigen Vorlagen und Vorrichtung zur Durchführung des Verfahrens


Die Erfindung betrifft ein Aufzeichnungsverfahren zur tonwertrichtigen
Wiedergabe von insbesondere farbigen Vorlagen, bei welchem die Bildaufzeichnung mittels mindestens einer relativ zum Aufzeichnungsträger beweglichen Reihe von einzeln ansteuerbaren Aufzeichnungselementen erfolgt,
wobei die Steuereinrichtung für die Aufzeichnungselemente diese Elemente
mindestens in die Zustände versetzen kann, bei welchen sie an- oder abgeschaltet sind, sowie eine Vorrichtung zur Durchführung des Verfahrens.

Einrichtungen der vorstehenden Art sind unter vielen anderen der
DE-PS 12 99 301, der DE-OS 24 23 245 und der DE-OS 29 34 939 zu entnehmen. Bei diesen Anordnungen setzt sich die auf dem relativ zur Abbil-


CW 2655.1 PB/MB

dungsanordnung bewegten Aufzeichnungsträger entstehende Abbildung aus einzelnen Bildpunkten von im wesentlichen gleichbleibendem Querschnitt zusammen.

Es ist das Ziel der vorliegenden Erfindung, eine Einrichtung der vorstehenden Art in der Weise weiterzubilden, daß die Dichte der einzelnen Bildpunkte praktisch beliebig fein abgestuft und dadurch eine tonwertrichtige Wiedergabe des Originales erzielt werden kann. Diese Möglichkeit ist besonders für die Erzeugung von Farbkopien mit möglichst natürlicher Farbwiedergabe bedeutsam.

Gemäß der Erfindung wird dieses Ziel durch die das Kennzeichen von Anspruch 1 bildende Merkmalskombination erreicht.

Bei dieser Anordnung kann die Dichte der einzelnen Bildpunkte in zeitlicher Aufeinanderfolge durch Überlagerung mehrerer Farbaufträge entweder verschiedener Größe oder verschiedener Farbkonzentration nach dem Prinzip des Gewichtssatzes aus einer Zweierpotenzreihe aufgebaut werden. Es genügt, die analogen Helligkeiten bzw. die Remissionen der zu schreibenden Bildpunkte zu messen, und diese Meßwerte zu logarithmieren und analog/digital zu wandeln. Jede Ziffer O oder L der Dualzahl des logarithmierten Helligkeitswertes wird dann in zeitlicher Aufeinanderfolge als relativer Spannungswert O oder 1 der Steuereinrichtung des dem Stellenwert der Dualzahl entsprechenden Aufzeichnungselementes zugeordnet, wodurch dieses Aufzeichnungselement an- oder abgeschaltet wird. Dementsprechend findet dann ein Farbauftrag oder kein Farbauftrag der entsprechenden Größe oder Konzentration auf dem gerade unter dem Aufzeichnungselement befindlichen Bildpunkt statt.

Die Feinheit der bei diesem Verfahren mit einer bestimmten Anzahl von beim Bilddichteaufbau mitwirkenden Aufzeichnungselementen erzielbaren Abstufung des Dichtewertes entspricht der Größe der in binärer Schreibweise mit einer bestimmten Stellenzahl ausdrückbaren Zahl, bzw. entspricht die Anzahl der zur Darstellung einer Farbe notwendigen Aufzeichnungselemente dem Duallogarithmus der Anzahl der erforderlichen Dichtestufen. Das heißt, mit 2 Aufzeichnungselementen lassen sich 4, mit 3 Elementen 8, mit 4 Elementen 16 Dichtestufen darstellen usw.

Dieser digitale Bilddichteaufbau läßt sich bei allen Aufzeichnungsverfahren anwenden, welche in der Lage sind, mittels eines Farbstoff übertragenden Elementes Bildpunkte von konstanter Farbdichte und variierender Größe oder von konstanter Größe und variierender Farbdichte zu erzeugen. Dies ist insbesondere bei einer Reihe von elektrografischen, mit Schreibstiften arbeitenden Aufzeichnungsverfahren, bei den Tintenspritzverfahren, beim Nadeldruck und beim Thermodruck der Fall.

Einzelheiten der Erfindung ergeben sich aus den Unteransprüchen und der Beschreibung, worin im folgenden anhand der Zeichnung mehrere Ausführungsbeispiele erörtert werden. Dabei zeigt

Fig. 1     einen erfindungsgemäßen Farbstrahldrucker mit Farbdüsen verschiedenen Querschnittes in perspektivischer Darstellung,

Fig. 2     die mathematische Zuordnung der erzeugbaren Dichtewerte zur Anzahl der hintereinander liegenden Aufzeichnungselemente,

Fig. 3A-3D die Zuordnung der Speicherplätze zu den einzelnen Bildpunkten im Falle eines Farbstrahldruckers mit drei Düsenreihen,

Fig. 4     die halbschematische Darstellung eines Farbstrahldruckers zur Herstellung tonwertrichtiger, farbiger Bilder mittels Farben verschiedener Konzentration,

Fig. 5     ein Steuersystem zur Aufrechterhaltung einer bestimmten Farbkonzentration.

Fig. 6     eine elektrophoretische Aufzeichnungsanordnung,

Fig. 7     einen Thermodrucker,

Fig. 8     einen Schnitt durch eine Nadeldruckanordnung, und

Fig. 9     einen Schnitt durch die Anordnung entlang der Linie IX-IX in
           Fig. 8.

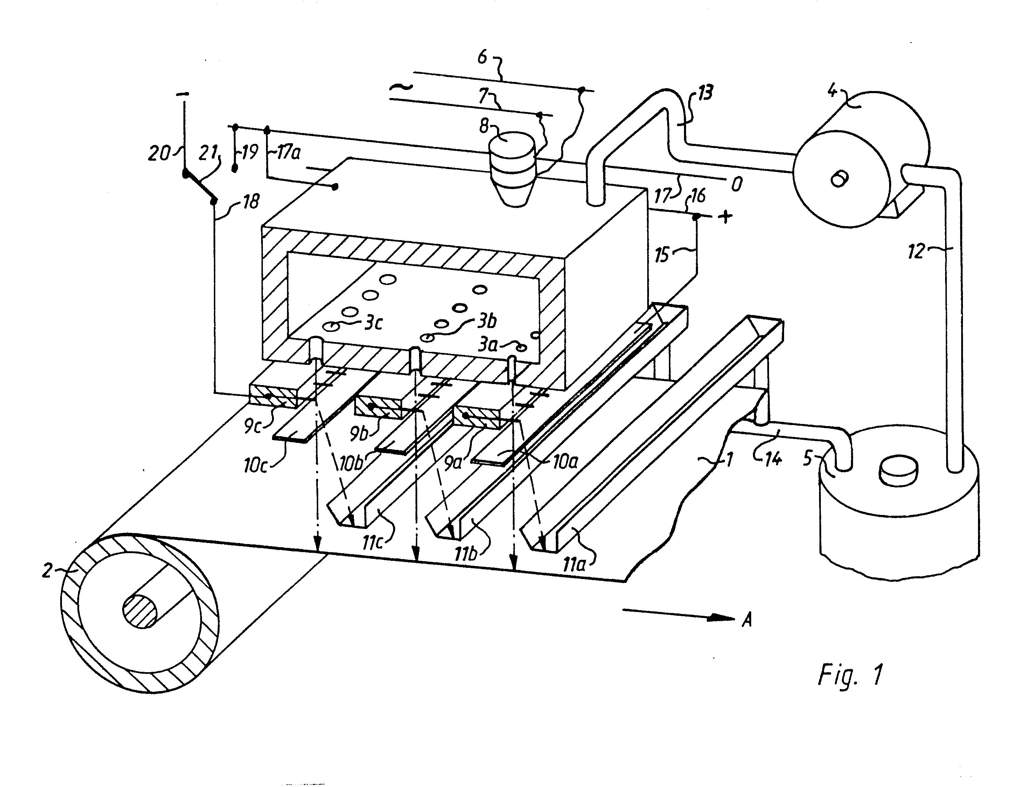

In Fig. 1 wird ein bandförmiger Aufzeichnunsträger 1, z.B. eine Bahn
weißen Papiers, in Pfeilrichtung A von einer Abwickelrolle 2 zu einer
nicht dargestellten Aufwickelrolle geleitet. Über der Papierbahn 1 ist
eine Düsenkammer 3 angeordnet, an welcher beim gezeigten Beispiel drei
Reihen von Düsen 3a-3b mit jeweils im Verhälntis 1:2 abgestuften Querschnitten angeschlossen sind.

Aus zeichnerischen Gründen sind sowohl die Düsendurchmesser als auch die
gegenseitigen seitlichen Abstände der Düsen übertrieben groß dargestellt.
In Wirklichkeit sollen die Düsenbohrungen einen Abstand von etwa 0,2 mm
voneinander haben, so daß auf der Breite eines DIN-A4-Formates etwa 1000
Düsen untergebracht werden können, wobei vorzugsweise zur Erzielung einer
vollkommenen Flächendeckung die Düsen in zwei Reihen hintereinander angeordnet sind und die Düsen der zweiten Reihe zu denen der ersten Reihe diagonal versetzt sind.

Der Farbauftrag erfolgt in der z. B. in der eingangs genannten
DE-OS 29 343 939 offenbarten Weise dadurch, daß der Düsenkammer 3 mittels
einer Dosierpumpe 4 aus einem Farbvorratsbehälter 5 über Rohrleitungen 12
und 13 Farbe zugeführt wird, welche das Innere der Düsenkammer 3 ausfüllt .

und unter einem gewissen Überdruck steht. An der Oberseite der Düsenkammer 3 ist ein sog. Piezo-Transducer 8, d.h. ein an Hochfrequenz liegender Druckübertrager angeordnet, welcher die in der Düsenkammer 3 befindliche Farbe einem periodischen Druckwechsel mit z.B. 50 kHz unterwirft. Dadurch wird der durch die Düsenbohrungen 3a - 3c gespritzte Farbstrom in einzelne Tropfen zerlegt.

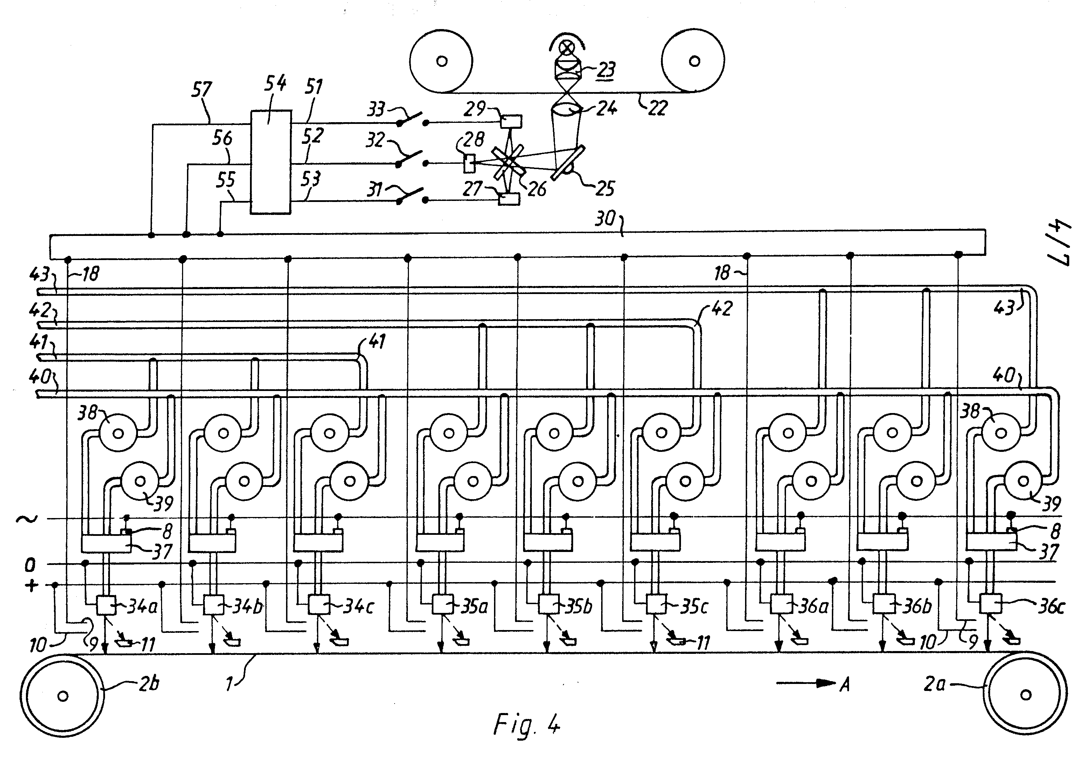

Unterhalb der mittels eines Leiters 17a mit einem Null-Leiter 17 verbundenen Düsenkammer 3 und in unmittelbarer Nähe der Düsenreihen 3a - 3c ist je eine Reihe von Ladeelektroden 9a - 9c angeordnet. Diese Ladeelektroden sind jeweils einschließlich der erforderlichen elektrischen Zuleitungen, welche die jeweilige Ladeelektrode mit einer Steuereinrichtung 30 verbinden (Fig. 4), in eine isolierende Kunststoffleiste eingebettet.

Unterhalb der Ladeelektrode 9 ist jeweils eine Ablenkelektrode 10a - 10c angeordnet, welche an ein positives Potential angeschlossen ist und mit ihrer Kante direkt an die Bahn der die Düsenöffnungen 3a - 3c verlassenden Tropfenströme heranreicht. Wird nun die Ladeelektrode 9 mit einem negativen Potential verbunden, so wird der Tropfen vor dem Abreißen von der Düsenkammer 3 mit dem entgegengesetzten Potential der Ladeelektrode 9 aufgeladen. Das heißt, er fliegt mit einer positiven, unipolaren Ladung weiter und wird folglich während seines Vorbeifluges an der ebenfalls positiv aufgeladenen Ablenkelektrode 10 abgelenkt und zu einem Tropfenfänger 11a - 11c geleitet. Von dort fließt die aufgefangene Farbe über eine Sammelleitung 14 zum Farbvorratsbehälter 15 zurück. Kein Tropfen gelangt zum Aufzeichnungsträger 1. Die betreffende Düse ist "ausgeschaltet".

Ist dagegen die Ladeelektrode 9 elektrisch mit der Düsenkammer 3 bzw. wie diese mit Null-Potential verbunden, so erhält der von der Düsenkammer abgetrennte Tropfen keine Ladung, weshalb er völlig unbeeinflußt an der Ablenkelektrode 10 vorbeifliegt. Die betreffende Düse ist "eingeschaltet".

Im folgenden wird noch gezeigt, wie dieses Aus- und Einschalten der Düsen gesteuert werden muß, damit die gewünschte Bildpunktfolge entsteht.

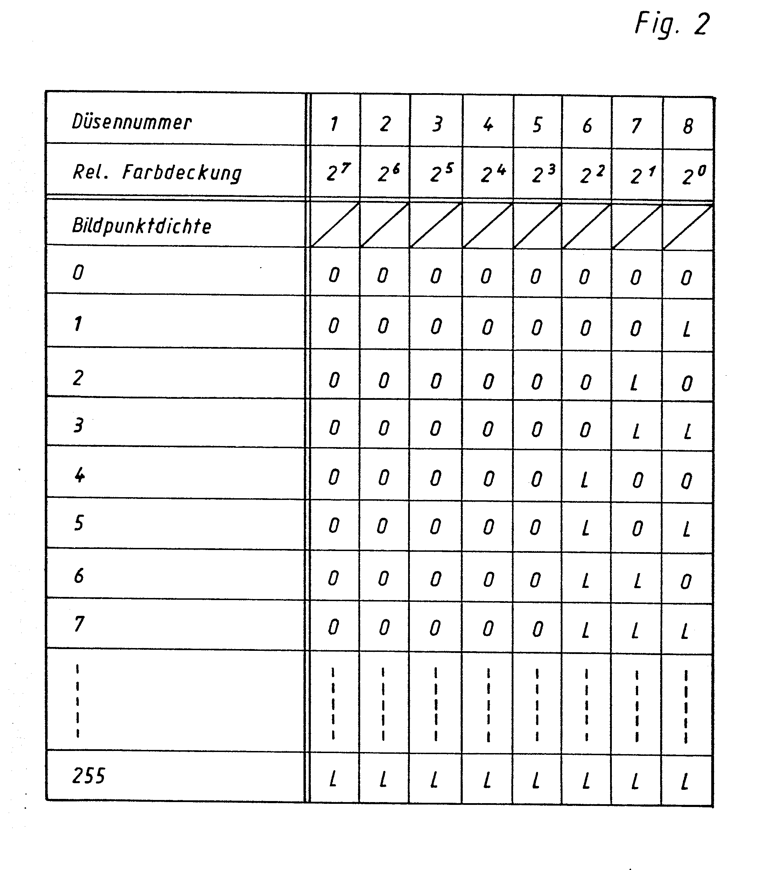

Figur 2 zeigt den mathematischen Zusammenhang zwischen Anzahl und Farbdeckung der verwendeten Düsenreihen und der damit erzielbaren Bildpunktdichten. Die mit dem Faktor 2 abgestufte relative Farbdeckung kommt dabei dadurch zustande, daß entweder, wie schon ausgeführt, die Düsenquerschnitte zueinander jeweils im Verhältnis 1 : 2 stehen. Da der Querschnitt des abreißenden Tropfens weitgehend dem Querschnitt der Düse entspricht, die Tropfenlänge aber von der für alle Düsen gleichbleibenden Transducerfrequenz abhängt, so ändern sich, zumindest solange die Ausströmgeschwindigkeit der Farbe in erster Näherung als für alle Düsen gleich groß betrachtet werden kann, die Masse und Dichte bzw. Deckkraft des aus der Düse verspritzten Tropfens weitgehend linear mit dem Düsenquerschnitt. Soweit die Strömungsgeschwindigkeit ihrerseits in nennenswertem Maße vom Düsenquerschnitt abhängt, wäre dies bei der Querschnittsbemessung entsprechend zu berücksichtigen.

Eine weitere Abstufungsmöglichkeit für die Farbdeckung der einzelnen Düsen besteht, wie im folgenden noch näher ausgeführt wird, in der Wahl einer verschiedenen Farbkonzentration der mit der betreffenden Düsenreihe verspritzten Farbe.

In jedem Fall läßt die als geometrische Reihe zur Basis 2 abgestufte relative Deckkraft der einzelnen Düsen die Herstellung jeder gewünschten Farbdeckung des Bildpunktes, angefangen vom sog. "Weißwert" mit der Deckung 0 bis zur maximalen Deckung, zu, welche, wie aus Fig. 2 entnehmbar, z.B. bei Verwendung von 8 Farbdüsen bereits dem Wert 255 entspricht. Hiermit können 256 verschiedene Deckungswerte wiedergegeben werden, was selbst für Farbreproduktionen anspruchsvollerer Art ausreichen dürfte.

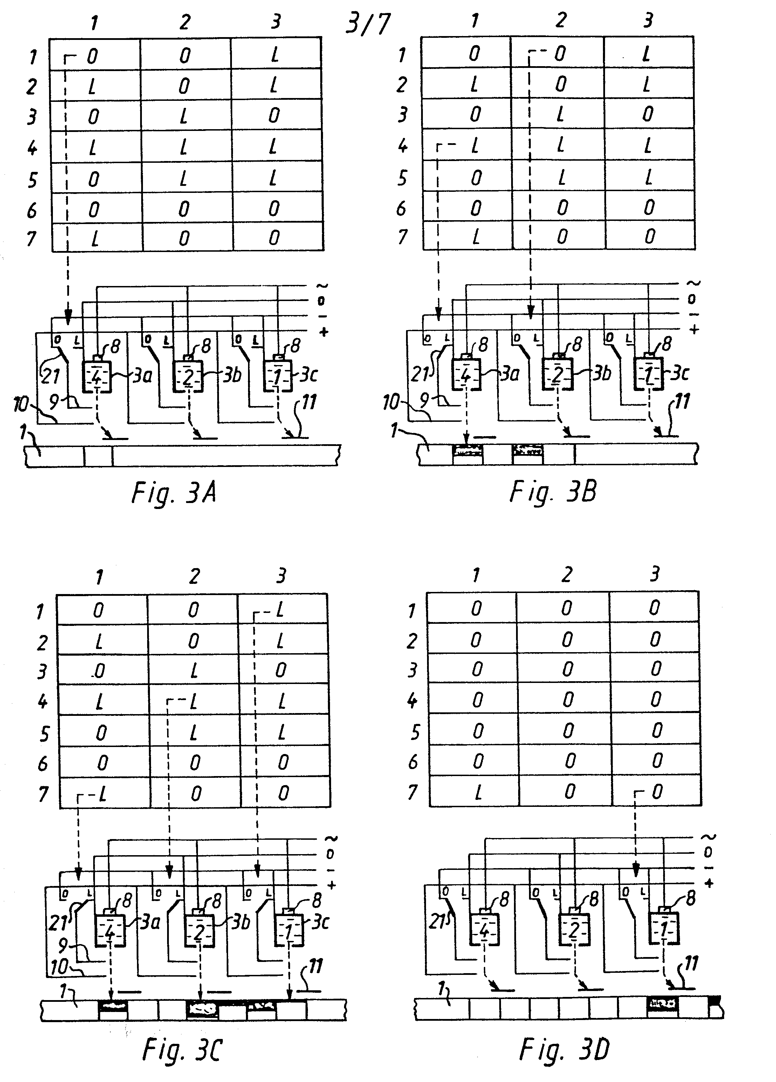

In den Figuren 3A - 3D wird dargestellt, wie mit einer von den Farbdüsen 3a - 3c gebildeten dreistufigen Düsenanordnung, mit welcher eine achtstufige Dichteskala  erzeugt werden kann, eine Reihe von aufeinanderfolgenden Bildpunkten aufgebaut wird. Dabei ist angenommen, daß die Farbdüsen 3a - 3c eine im Verhältnis 4 : 2 : 1 abgestufte Farbdeckung liefern. Dies kann einmal dadurch erreicht werden, daß, wie in Fig. 1 dargestellt, die Farbdüsen entsprechend abgestufte Düsendurchmesser aufweisen. Zum andern ist es aber auch möglich, die Düsen mit Farbe von entsprechend abgestufter Konzentration zu beschicken. Da die Dichte D eines auf einem Bildträger aufgebrachten Farbfleckes mit der Farbstoffkonzentration c in dem einfachen Zusammenhang

$$D = D_o \cdot c \qquad (1)$$

steht, läßt sich eine in der erfindungsgemäßen Weise abgestufte Dichtefolge auch durch Überlagerung von Tropfen aufbauen, deren Farbkonzentrationen sich verhalten wie die Glieder einer Zweierpotenzreihe.

Wie ebenfalls bereits im Zusammenhang mit Fig. 1 ausgeführt, setzt ein mit Wechselspannung beaufschlagter piezo-elektrischer Transducer 8 die in den Farbdruckkammern befindliche Farbe in Vibration, so daß der Farbstrom beim Ausströmen durch die Farbdüsen entsprechend der Transducerfrequenz in einen regelmäßigen Tropfenstrom zerlegt wird. Die an der Tropfenaustrittstelle angeordneten Ladeelektroden 9 sind, je nach Stellung des Schalters 21, mit negativem Potential oder mit Null-Potential, die Ablenkelektroden 10 mit positiven Potential verbunden. Das negative Potential der Ladeelektroden 10 bewirkt, daß an der Meniskuskuppe jedes sich an der jeweiligen Ausströmdüse formierenden Tropfens vor dem Abreißen des Tropfens eine positive Ladung influenziert wird, die dem Tropfen nach dem Abreißen erhalten bleibt. Der Tropfen ist somit nach dem Abreißen positiv geladen. Beim Vorbeifliegen an der ebenfalls an positivem Potential liegenden Ablenkelektrode 10 wird deshalb der Tropfen abgestoßen und landet auf dem Tropfenfänger 11. Bei dieser Schaltung der Ladeelektrode, in welcher die Düse sozusagen ausgeschaltet ist, gelangt kein Tropfen auf den Aufzeichnungsträger. Es wird der sog. Weißwert geschrieben.

Liegt die Ladeelektrode 9 wie die Düsenkammer 3 an Nullpotential, erhält der Tropfen keine Ladung und wird daher an der Ablenkelektrode 10 nicht abgelenkt. Die Düse ist sozusagen eingeschaltet. Sind alle Farbdüsen 3a - 3c eingeschaltet, so entsteht auf dem Bildpunkt die Dichte 4 + 2 + 1 = 7. Die Dichte reduziert sich in der aus Fig. 2 ersichtlichen Weise, falls eine oder mehrere der Düsen ausgeschaltet sind. Damit jeder Bildpunkt genau einmal von den jeweils eingeschalteten Düsen getroffen wird, muß natürlich die Frequenz des Transducers 8 so eingestellt und synchronisiert sein, daß immer gerade dann ein Impuls auf den Flüssigkeitsraum gegeben wird, wenn der zu beaufschlagende Bildpunkt sich unter der betreffenden Düse befindet, wobei noch ein entsprechender Zeitverzug für die Flugzeit des Tropfens zwischen der Düse und dem Aufzeichnungsträger 1 zu berücksichtigen ist.

In den Figuren 3A-3D ist zur Verdeutlichung des Zusammenhanges unmittelbar über der Figur der einer bestimmten Bildfolge zugeordnete Speicherinhalt dargestellt, wobei die senkrechte Zahlenreihe die Bildpunkte bzw. das Vorrücken des Aufzeichnungsträgers um jeweils einen Bildpunkt und die waagerechte Zahlenreihe die dem jeweiligen Speicherplatz zugeordnete Düse versinnbildlicht. Den Speicherinhalt bildet die in Dualzahlen wiedergegebene, von den Dualwerten 000 bis LLL abgestufte Dichte des jeweiligen Bildpunktes.

Diese Dichtewerte werden zunächst von oben nach unten in den Speicher eingelesen. Zum Zeitpunkt t = 1 liegt dann, wie Fig. 3A zeigt, der Bildträger mit demjenigen Punkt, auf den der dem Speicherplatz 1/1 entsprechende erste Dichtewert geschrieben werden soll und auf welchem beim dargestellten Beispiel lt. Speicherinhalt die Dichte 1 bzw. OOL erzeugt werden soll, unter der ersten Farbdüse 3a bzw. 1, welche Farbe der Konzentration c = 4 verspritzt. Da der Speicherplatz 1/1 den Wert O enthält, wird keine Farbe auf den Bildträger deponiert und dieser wandert mit seinem Weißwert weiter.

Zum Zeitpunkt t = 2 befindet sich der Bildpunkt 2, auf welchem lt. Speicherinhalt die Dichte 5 bzw. LOL erzeugt werden soll, unter der Farbdüse 1. Es wird der Speicherplatz 2/1 angesteuert, welcher den Wert L enthält. Dementsprechend wird der Schalter 22 der Düse 1 auf L gelegt, die Düse 1 wird eingeschaltet und es wird ein Farbtropfen mit der Konzentration 4 auf dem Bildpunkt abgesetzt, welcher auf dem Bildpunkt die Dichte 4 erzeugt.

In dieser Weise beaufschlagt die Farbdüse 1 unter Abrufung der Speicherplätze 1/1 bis 1/3 die ersten drei Bildpunkte, ohne daß die Farbdüse 2, welche beim dargestellten Beispiel einen Abstand von drei Bildpunkten von der Farbdüse 1 hat, tätig wird. Dies ist, wie aus Fig. 3B ersichtlich, erst zum Zeitpunkt t = 4 der Fall. Ab diesem Zeitpunkt schreibt jede der Farbdüsen 1 und 2 eine Bildfolge, bis zum Zeitpunkt t = 7, wie aus Figur 3C ersichtlich, auch die Farbdüse 3 einsetzt.

Beim angenommenen Beispiel, bei welchem nur genau 7 Bildpunkte geschrieben werden, ist zum Zeitpunkt t = 8 die Farbdüse 1, und zum Zeitpunkt t = 11 die Farbdüse 2 nicht mehr tätig. Wie aus Figur 3D ersichtlich, stellt zum Zeitpunkt t = 14 auch die Farbdüse 3 ihre Tätigkeit ein. Zum Schreiben einer fortgesetzten Bildpunktreihe müssen natürlich laufend weitere Dichtewerte in den als Schieberegister ausgeführten Speicher nachgeschoben werden.

In Figur 4 ist in halbschematischer Weise ein Farbstrahldrucker zur Erzeugung von mehrfarbigen Bildern dargestellt. Der Einfachheit halber ist

CW 2655.1 PB/MB

dabei wieder angenommen, daß jeder der drei zur substraktiven Farbwiedergabe auf den weißen Aufzeichnungsträger erforderlichen Komplementärfarben Gelb, Cyan und Magenta nur jeweils drei Farbdüsen mit Farbe verschiedener Konzentration zugeordnet sind, welche nach Vorstehendem lediglich 8 verschiedene Dichtestufen auf dem jeweiligen Bildpunkt erzeugen können, obgleich gerade bei der naturgetreuen Farbwiedergabe die Aufteilung der Bildpunktdichte in möglichst viele Tonwertstufen, z.B. die 256 Stufen aus Figur 2, besonders bedeutsam erscheint. Für die praktische Anwendung, z.B. bei der Herstellung farbiger Papierbilder, ausgehend von einem Farbnegativ- oder Diapositiv, ist demnach die Zahl der pro Farbe eingesetzten Farbdüsen entsprechend erweitert zu denken.

Zur Herstellung von Papierbildern von einem zu kopierenden Colornegativ- oder Diapositivbild wird das erste der auf einem Filmstreifen 22 befindlichen Bilder in die Abtaststation gebracht, in welcher es von einer Beleuchtungseinrichtung 23 beleuchtet wird. In der Abtaststation wird das Bild mittels eines Projektionsobjektives 24 und eines Schwenkspiegels 25 abgetastet und mittels eines dichroitischen Spiegels 26 in seine drei Grundfarben zerlegt. Diese Grundfarbenbilder werden auf je eine CCD-Zeile 27-29 mit einer der Anzahl der über die Breite des Aufzeichnungsträgers verteilten Bildpunkte entsprechenden Anzahl von Elementen projiziert, welche hieraus ein zeilenmäßiges Signal gewinnt. Das zeilenmäßige Signal der CCD-Zeile, welche bei den hier in Rede stehenden Anwendungen üblicherweise 1024 Elemente umfaßt, wird über Leitungen 51-53 einer Recheneinheit 54 zugeführt, in welcher es logarithmiert und analog/digital gewandelt wird. Mittels der Schalter 31-33 wird dabei jeweils nur die dem gerade abgetasteten Farbauszug zugeordnete CCD-Zeile angewählt. Auf diese Weise entsteht aus jedem Einzelsignal des jeweiligen Farbauszuges eine dreistellige Dualzahl, welche über Leitungen 55-57 einer einen Speicher enthaltenden Steuereinrichtung 30 zugeführt wird. Die Zahl der hierfür pro Farbauszug erforderlichen Speicherplätze errechnet sich wie folgt:

Zunächst ist die Zahl $N_{DR}$ der zur Darstellung einer Farbe erforderlichen Düsenreihen gleich dem Duallogarithmus der Anzahl der erforderlichen Dichtestufen ND, bzw.

$$N_{DR} = ld \ N_D \qquad (2).$$

Hieraus ergibt sich die Anzahl der erforderlichen Speicherplätze $N_{SP}$ zu

$$N_{SP} = A/a \ (ld \ N_D - 1) + 1 \qquad (3),$$

Wenn A der Abstand der Düsenreihen und a der Abstand der einzelnen Bildpunktreihen voneinander ist.

Sobald die erste Zeile des Gelbauszuges mittels eines Blaufilters abgetastet ist, enthält der Speicher im Falle der vorher erwähnten 1024-elementigen CCD-Zeile 1024 Dualzahlen, welche in der obersten Registerebene liegen. Wenn der Abstand von Düsenreihe zu Düsenreihe angenommenerweise 20 Bildpunktabstände beträgt, wird dieser Vorgang gemäß Gleichung (3) 20 x 2 + 1 = 41 mal ausgeführt, werden somit 41 Bildzeilen abgetastet und 41 Registerebenen mit Dualzahlen der je 1024 abgetasteten Dichtewerte gefüllt.

Nunmehr kann der Schreibvorgang beginnen. Zu diesem Zweck werden, von der allgemeinen Clockfrequenz, welche auch der Transducerfrequenz entspricht, gesteuert, die ersten Stellen der 1024 Dichtewerte des Gelbauszuges abgefragt und auf die Elektroden beaufschlagt, welche nunmehr die Ablagerung des ersten Gelbanteiles der Dichte in die erste Schreibzeile steuern. Der Prozeß läuft dann weiter, wie vorher im Zusammenhang mit den Figuren 3A - 3D beschrieben.

Sobald die erste Schreibzeile der ein Gelbbild tragenden Aufzeichnungsträgerstellen die letzte Gelbdüsenreihe verlassen hat, wird die zugehörige oberste Registerebene mit dem ersten Dichteanteil der 42. Bildzeile
des Gelbauszuges überschrieben.

Wenn der gesamte Gelbauszug geschrieben ist, schwingt der Drehspiegel 25,
welcher mit einem Sägezahnsignal angesteuert ist, in seine Ausgangslage
zurück und tastet das Vorlagenbild zur Gewinnung des nächsten Farbauszuges von neuem ab. Auf diese Weise wird mit der grüngefilterten CCD-Zeile
das Magentasignal und anschließend mit der rotgefilterten CCD-Zeile das
Cyan-Signal in den Speicher eingelesen, wobei die jeweilige CCD-Zeile
mittels eines der Schalter 31-32 an den Speicher 30 angeschlossen wird.

Der Druckvorgang des Farbstrahldruckers erfolgt, wie vorher beschrieben.
Dabei sind dem Gelbauszug die Farbdüsen 34a - 34c, dem Magenta-Auszug die
Farbdüsen 35a - 35c und dem Cyanauszug die Farbdüsen 36a - 36c zugeordnet. Jeder Farbdüsenreihe ist eine Reihe von Mischkammern 37 vorgeschaltet. Die Mischkammern 37 werden mittels Dosierpumpen 38 und 39 mit Farbe
und Farblösungsmittel bzw. Wasser versorgt. Dabei sind alle Dosierpumpen
für das Lösungsmittel 39 an eine gemeinsame Zuleitung für Wasser 40 angeschlossen, während jeweils drei Dosierpumpen 38 für Farbe mit einer Zuleitung für Gelb 41, für Magenta 42 und für Cyan 43 verbunden sind. Die
Steuerung der Ladeelektroden der Ablenkelektroden 10 sowie der Transducer
erfolgt, wie vorher beschrieben, wobei alle Zuleitungen 18 für die Ladeelektrode 10 an die zentrale Steuer- und Speichereinheit 30 geführt sind,
in welcher das taktgerechte Anschalten der jeweiligen Ladeelektrode 10 an
positives oder Nullpotential erfolgt.

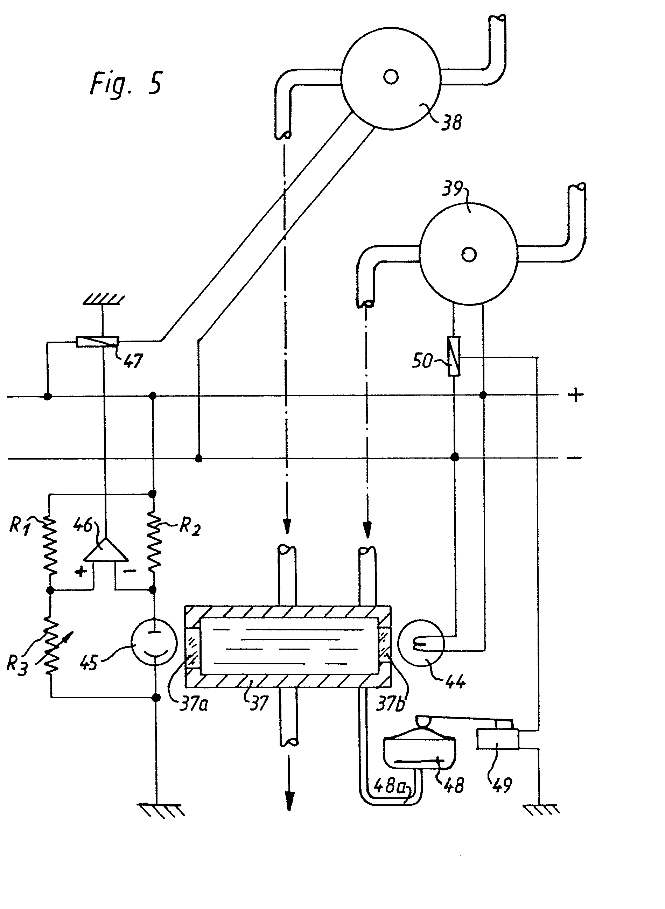

Gemäß Figur 5 ist jede Mischkammer 37 mit Sichtfenstern 37a und 37b versehen, vor denen eine Lampe 44 bzw. eine Meßdiode 45 angeordnet sind. Die
Meßdiode 45 ist Teil einer von zwei festen Widerständen $R_1$ und $R_2$,
einem einstellbaren Widerstand $R_3$ und der Meßdiode 45 gebildeten Brückenschaltung. In die Verbindungsleitung der Brücke ist ein Differenzverstärker 46 eingeschaltet, welcher ein Relais 47 für die Farbdosierpumpe 38 steuert. Die Dosierpumpe 38 wird eingeschaltet, sobald die Farbkonzentration in der Mischkammer 37 unter einen bestimmten, mittels des
Potentiometers $R_3$ einstellbaren Wert sinkt.

Zur Steuerung der Dosierpumpe 39 für das Verdünnungsmittel ist an die
Mischkammer 37 mittels einer Leitung 48a eine Druckmeßdose 48 angeschlossen, welche von einem Mikroschalter 49 abgetastet wird. Der Mikroschalter
steuert ein Relais 50 für die Dosierpumpe 39, welche eingeschaltet wird,
sobald der Druck in der Mischkammer 37 und damit auch in der mit der
Mischkammer verbundenen Düsenkammer 34 bzw. 35 bzw. 36 (Fig. 4) unter
einen bestimmten Wert sinkt. Die Druckmeßdose 48 dient dabei gleichzeitig
als Druckspeicher zur Überbrückung der Schaltzeiten.

Natürlich ist es auch möglich, das Verdünnungsmittel durch eine umlaufende Flügelpumpe oder eine andere dauernd einen konstanten Druck liefernde
Pumpe zuzuführen und lediglich die Farbe mittels einer schaltbaren Pumpe,
welche einen höheren Druck liefert, als die Pumpe für das Verdünnungsmittel, dazu zu dosieren. Die Verwendung von zwei in Abhängigkeit vom jeweiligen Meßergebnis schaltbaren Pumpen erlaubt aber eine schnellere und genauere Regelung der Farbkonzentration.

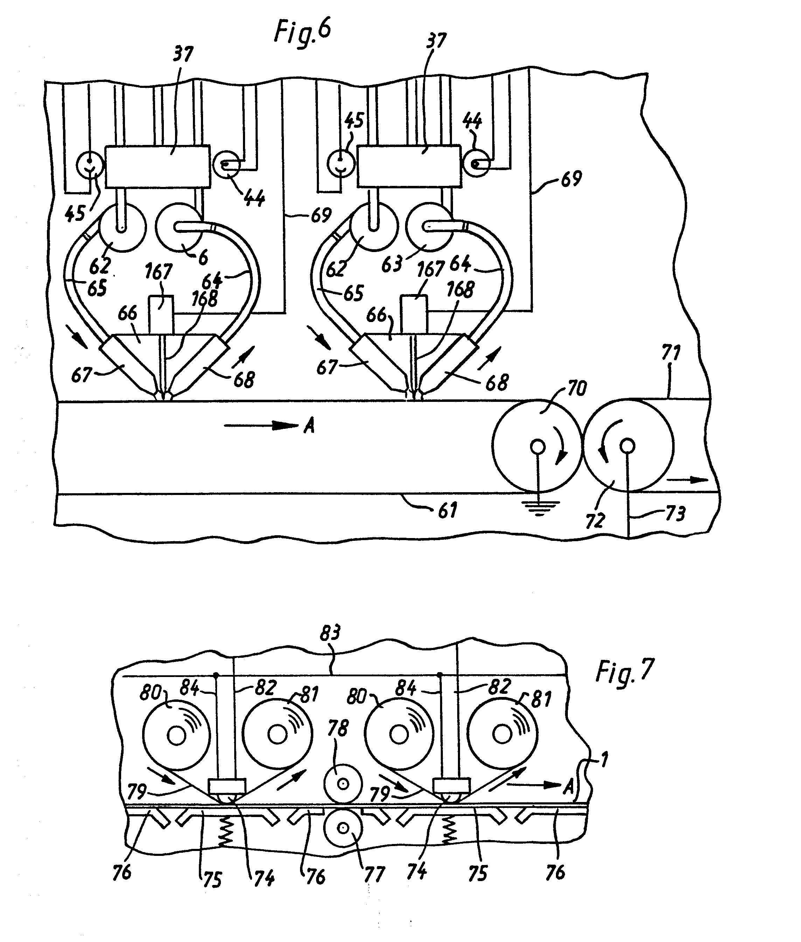

Gemäß Fig. 6 sind an mehrere, in Transportrichtung A eines Zwischenaufzeichnungsträgers 61 hintereinander liegende Farbkammern 37, welche in
der im Zusammenhang mit Fig.5 geschilderten Weise unter Zuhilfenahme
einer Lampe 44 und einer Meßdiode 45 mit Farbe einer bestimmten Konzentration versorgt werden, je eine Druck- bzw. Saugpumpe 62, 63 angeschlossen. Der Zwischenaufzeichnungsträge 61 wird von einem elektrisch leitfähigen Metallband gebildet, welches über geerdete, leitfähige Metallwalzen 70 gespannt ist. Die Druckpumpe 62 und die Saugpumpe 63 sind mittels
Leitungen 64 und 65 mit je einer, an einem Düsenträger 66 befestigten Zu- und Abströmdüse 67, 68 für elektrophoretischen Entwickler verbunden. An den Düsenträgern 66 sind Elektrodenträger 167 angeordnet, welche je eine Reihe von Stiftelektroden 168 tragen. Die Stiftelektroden 168 sind mittels je eines Leiterbandes 69 mit einer Steuereinrichtung verbunden, welche sie zur Erzeugung eines Bildes einzeln ansteuert.

Der durch die Stiftelektroden 168 gesteuerte Farbauftrag erfolgt in der in einem Artikel von H.-D. Hinz, H. Löbl und U. Rothgordt "Electrophoretic Recording of Contiuous-Tone Images" im Journal of Applied Photographic Engineering, Vol. 6, No. 3, Juni 1980, Seiten 69 bis 72, geschilderten, elektrophoretischen Weise. Dabei wird mittels der Zuströmdüse 67 und der Abströmdüse 68 elektrophoretischer Entwickler in Pfeilrichtung an der Farbauftragsstelle vorbeigepumpt. An den Stellen des relativ zur Farbauftragsstelle bewegten Aufzeichnungsträgers 61, an denen ein positives Signal von beispielsweise + 1000 V an einer der Stiftelektroden 168 anliegt, erfolgt ein Niederschlag von im elektrophoretischen Entwickler suspendierten, negativ geladenen Tonerteilchen. Das so entstehende Tonerbild wird im Laufe der weiteren Bewegung des Zwischenaufzeichnungsträgers 61 auf einen endgültigen Aufzeichnungsträger 71, beispielsweise eine Papierbahn, übertragen. Der endgültige Aufzeichnungsträger 71 ist dabei über eine Metallwalze 72 gespannt, deren Achse über eine Leitung 73 an positivem Potential liegt.

Natürlich könnten anstelle des vorstehenden elektrophoretischen Verfahrens auch andere elektrografische Verfahren wie z. B. das Verfahren nach der eingangs genannten DE-OS 24 23 245, mittels der erfindungsgemäßen digitalen Tonwertsteuerung betrieben werden. Im letztgenannten Falle müßten z. B. lediglich anstelle der Steuerstifte 168 des vorliegenden Beispiels die dort der Erzeugung eines Ladungsbildes dienenden Steuerstifte in mehreren Reihen angeordnet und jeweils an eine Steuereinrichtung geschaltet werden, um ein digital abgestuftes, latentes elektrostatisches Bild und einen entsprechend abgestuften Farbauftrag zu erhalten.

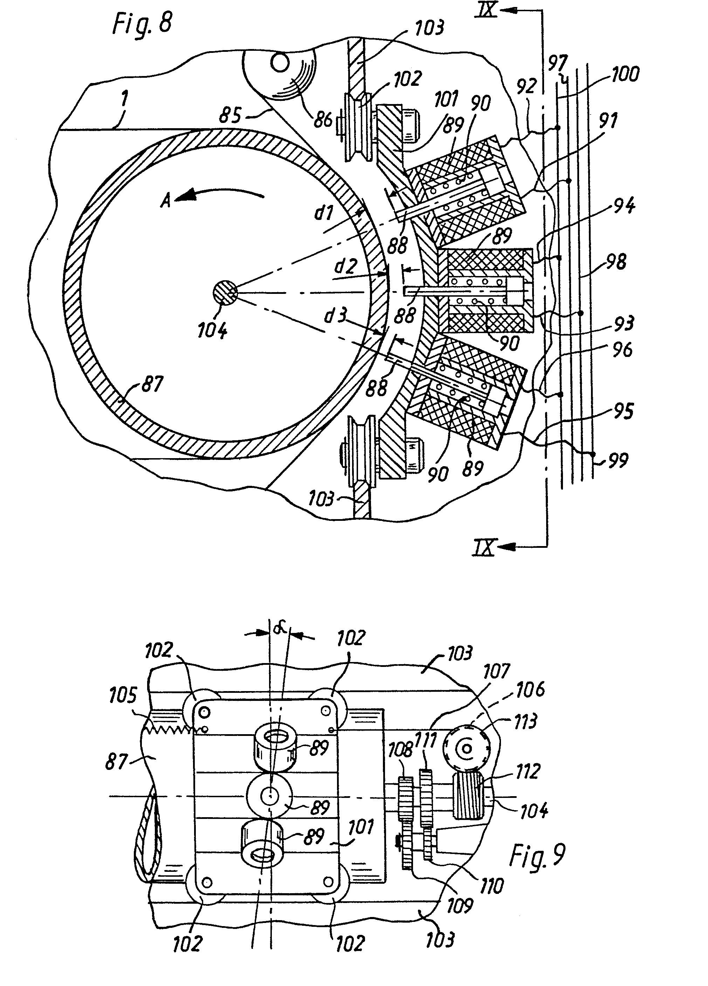

Gemäß Fig. 7 stehen mehrere Reihen von z. B. aus der DE-PS 12 99 301 bekannten Thermodruckelelemten 74 in Kontakt mit dem in Pfeilrichtung A bewegten Aufzeichnungsträger 1. Der Aufzeichnungsträger 1 wird vorzugsweise von einer Papierbahn gebildet. Er wird mittels gefederter Andruckplatten 74, welche in eine Führungsbahn 76 für den Aufzeichnungsträger 1 eingefügt sind, in Kontakt mit dem Aufzeichnungsträger gehalten. Zur Einleitung der Transportbewegung in den Aufzeichnungsträger 1 sind Transportwalzen 77 und 78 vorgesehen.

Zwischen dem Aufzeichnungsträger 1 und den Thermodruckköpfen 74 ist je ein Farbband 79 eingeschaltet, welches von einer Abwickelrolle 80 zu einer Aufwickelrolle 81 läuft. Die Steuerung der Thermodruckköpfe 74 erfolgt mittels je einer Steuerleitung 82. Als Rückleitung dient eine gemeinsame Leitung 83, an welche die einzelnen Thermodruckköpfe mittels je einer Leitung 84 angeschlossen sind.

Die Differenzierung des Farbauftrages erfolgt in diesem Falle entweder dadurch, daß jedes der Farbbänder verschieden dicht mit Farbe belegt ist, oder dadurch, daß die Thermodruckelemente jeder Reihe mit verschieden großem Energieeinsatz betrieben werden. Der Farbauftrag erfolgt jeweils durch Anschmelzen oder Sublimieren der auf dem Farbband befindlichen Farbe. Natürlich können anstelle der Thermodruckelemente auch andere Wärmeaufzeichnungselemente, beispielsweise Infrarot-Laser mit verschieden großem Energieeinsatz oder dgl., verwendet werden.

In den Fig. 8 und 9 ist eine Nadeldruckeinrichtung dargestellt. Der Farbauftrag erfolgt mittels eines Farbbandes, welches von einer nicht dargestellten Abwickelrolle zu einer Aufwickelrolle 86 geleitet wird. Dabei ist nur ein Farbband 85 für alle Farbaufträge vorgesehen. Die Differenzierung des Farbauftrages erfolgt über die verschieden großen, im Verhältnis $1 : \sqrt{2}$ abgestuften Nadeldurchmesser bzw. über die dementsprechend im Verhältnis 1 : 2 abgestuften Nadelquerschnitte. Die Nadeldurchmesser sind in der Zeichnung der Deutlichkeit halber übertrieben groß
dargestellt. Damit der Flächendruck der Nadeln am Farbband 85 für jeden
Nadelquerschnitt etwa konstant bleibt, legen die Nadeln vor dem Auftreffen auf dem Farbband einen verschieden großen Anlaufweg $d_1$ bis $d_3$ zurück. Der unter dem Farbband 85 liegende Aufzeichnungsträger 1 ist über
eine Trommel 87 geführt, welche in Pfeilrichtung A umläuft.

Im dargestellten Beispiel liegen in Transportrichtung A des Aufzeichnungsträgers drei Schreibnadeln 88 hintereinander, welche mittels je
eines Elektromagneten 89 betätigt werden. Die Nadeln 88 werden durch Federn 90 in ihrer Ausgangslage gehalten. Die Elektromagneten 90 sind mittels Leitungen 91 bis 100 mit einer Steuereinrichtung und einer entsprechenden Rückleitung verbunden. Die drei Magnete sind auf einem gemeinsamen Transportschlitten 101 angeordnet, welcher mittels Führungsrollen 102
an gerätefesten Führungsstangen 103 geführt ist.

Wie aus Fig. 9 ersichtlich, sind die drei Magnete 89 in einer von der
senkrechten zur Transportachse 104 um einen Winkel $\alpha$ abweichenden Linie
angeordnet. Hierdurch wird erreicht, daß die Nadeldruckeinrichtungen auf
der in Spiralen um die Trommel 87 laufenden Abtastbahn genau hintereinander liegen. Der Winkel $\alpha$ ist in der Zeichnung der Deutlichkeit halber
übertrieben groß dargestellt. In Wirklichkeit gilt

$$tg\ \alpha = \frac{h}{U} \qquad\qquad (1)$$

wobei h der Steigung der Abtastspirale und U dem Umfang der Trommel 87
entspricht. Da h in der Größenordnung des gewünschten Auflösungsvermögens
der Abbildung liegt, hat $tg\ \alpha$ bzw. der Winkel $\alpha$ somit einen relativ
kleinen Wert.

CW 2655.1 PB/MB

Damit der Transportschlitten 101 bei jeder Umdrehung der Trommel 87 nur um den relativ kleinen Wert h verschoben wird, wird der unter der Wirkung einer Rückholfeder 105 stehende Transportschlitten 101 mittels eines Seilzuges 107 bewegt, welcher um eine Aufwickelrolle 106 gelegt ist, die mittels eines mehrstufigen Untersetzungsgetriebes 112 bis 113 von der Trommelachse 104 angetrieben wird.

–1–

AGFA-GEVAERT AG LEVERKUSEN
Camera-Werk München
Patent- und Lizenzwesen

CW 2655.1 PB/MB                          16. April 1982
                                         51-bg-se, 0743C

Ansprüche

1.  Aufzeichnungsverfahren zur tonwertrichtigen Wiedergabe von insbesondere farbigen Vorlagen, bei welchem die Bildaufzeichnung mittels
    mindestens einer relativ zum Aufzeichnungsträger beweglichen Reihe
    von einzeln ansteuerbaren Aufzeichnungselementen erfolgt, wobei die
    Steuereinrichtung für die Aufzeichnungselemente diese Elemente mindestens in die Zustände versetzen kann, bei welchen sie an- oder ab-
    geschaltet sind, dadurch gekennzeichnet, daß die analogen Helligkei-
    ten der einzelnen Bildpunkte der Vorlage (22) mittels eines elektrooptischen Meßfühlers (23-29) gemessen, in einer Recheneinrichtung (54) logarithmiert, analog-digital gewandelt und einer Steuereinrichtung (30) zugeführt werden, welche mehrere, jeweils einem
    Bildpunkt zugeordnete, in Bewegungsrichtung (A) des Aufzeichnungsträgers (1, 61) hintereinander liegende Aufzeichnungselemente
    (3a-3c, 34a-34c, 35a-35c, 36a-36c, 67, 68, 74, 88) in der Weise

CW 2655.1 PB/MB

steuert, daß der Wert jeder Ziffer (O, L) der Dualzahl des logarithmierten Helligkeitswertes die hintereinanderliegenden, in ihrer
Farbdeckung in einer geometrischen Reihe zur Basis zwei abgestuften
Aufzeichnungselemente (3a-3c, 34a-34c, 35a-35c, 36a-36c, 67, 68, 74,
88) nach Maßgabe ihrer einem bestimmten Stellenwert innerhalb der
besagten Dualzahl entsprechenden Farbdeckung an- oder abschaltet.

2. Aufzeichnungseinrichtung zur Durchführung des Aufzeichnungsverfahrens nach Anspruch 1, gekennzeichnet durch folgende Kombination:

   a) Es sind mehrere in Bewegungsrichtung (A) des Aufzeichnungsträgers (1, 61) hintereinander liegende Reihen von einzeln ansteuerbaren Aufzeichnungselementen (3a-3c, 34a-34c, 35a-35c,
      36a-36c, 67, 68, 74, 88) vorgesehen,

   b) die Farbdeckung der hintereinanderliegenden Reihen von Aufzeichnungselementen (3a-3c, 34a-34c, 35a-35c, 36a-36c, 67, 68,
      74, 88) ist in einer geometrischen Reihe zur Basis zwei abgestuft,

   c) jedes der einzeln ansteuerbaren Aufzeichnungselemente (3a-3c,
      34a-34c, 35a-35c, 36a-36c, 67, 68, 74, 88) ist mit einer Steuereinrichtung (30) verbunden, und die Steuereinrichtung (30)
      ist so getaktet, daß jedes der in Bewegungsrichtung (A) des
      Aufzeichnungsträgers (1, 61) hintereinanderliegenden, einer
      Reihe von in dieser Richtung hintereinanderliegenden Bildpunkten zugeordneten Aufzeichnungselemente einmal pro Bildpunkt angesteuert wird,

   d) die Aufzeichnungselemente sind so mit der Steuereinrichtung (30) verbunden, daß jeweils nur die Aufzeichnungselemente
      angeschaltet werden, welche nach ihrer Stellung innerhalb der bezüglich ihrer Farbdeckung abgestuften Reihen von Aufzeichnungselementen in Analogie mit einer binären Darstellung der für den jeweiligen Bildpunkt benötigten Farbdeckung mit dem von Null verschiedenen Zahlenwert (L) zu belegen wären.

3. Aufzeichnungseinrichtung nach Anspruch 1 oder 2, dadurch gekennzeichnet, daß die in Bewegungsrichtung (A) hintereinander liegenden Reihen von Aufzeichnungselementen einen in einer geometrischen Reihe zur Basis zwei abgestuften wirksamen Querschnitt aufweisen.

4. Aufzeichnungseinrichtung nach Anspruch 1 oder 2, dadurch gekennzeichnet, daß jede der in Bewegungsrichtung A hintereinander liegenden Reihen von Aufzeichnungselementen mit einem anderen Farbvorrat (37, 79) zusammenarbeitet, wobei die Konzentrationen der den jeweiligen Farbvorrat bildenden Farben in einem geometrisch zur Basis zwei abgestuften Verhältnis zueinander stehen.

5. Aufzeichnungseinrichtung nach Anspruch 1 oder 2, dadurch gekennzeichnet, daß jede der in Bewegungsrichtung (A) hintereinander liegenden Reihen von Aufzeichnungselementen mit verschieden großem Energieeinsatz betreibbar ist, wobei die in den aufeinanderfolgenden Reihen von Aufzeichnungselementen eingesetzten Energiemengen in einen geometrisch zur Basis zwei abgestuften Verhältnis zueinander stehen.

6. Aufzeichnungseinrichtung nach einem der Ansprüche 2-4, dadurch gekennzeichnet, daß die Aufzeichnungselemente von mindestens zwei in Bewegungsrichtung (A) hintereinander liegenden, quer zu dieser Bewegungsrichtung erstreckten Reihen von Farbdüsen (3a-3c, 34a-34c, 35a-35c, 36a-36c) gebildet werden, wobei jeder Farbdüse eine der Steuerung der Düse dienenden Ladeelektrode (9) zugeordnet ist, welche mit der Steuereinrichtung (30) verbunden ist.

7. Aufzeichnungseinrichtung nach Anspruch 6, dadurch gekennzeichnet, daß die in Bewegungsrichtung (A) hintereinander liegenden Düsenreihen (3a-3c) einen in einer geometrischen Reihe zur Basis zwei abgestuften Düsenquerschnitt aufweisen.

8. Aufzeichnungseinrichtung nach Anspruch 6, dadurch gekennzeichnet, daß jede der in Bewegungsrichtung A hintereinander liegenden Düsenreihen (34a-34c, 35a-35c, 36a-36c) mit einem anderen Farbvorratsraum (37) verbunden ist, und daß die Konzentrationen der in diesen Vorratsräumen befindlichen Farben in einem geometrisch zur Basis zwei abgestuften Verhältnis zueinander stehen.

9. Aufzeichnungseinrichtung nach Anspruch 8, dadurch gekennzeichnet, daß jeder der den Farbdüsen (34a-34c, 35a-35c, 36a-36c) vorgeschalteten Mischräume (37) mit je zwei Dosierpumpen (38, 39) zur Zuführung von Farbe und Farblösungsmittel im zur Herstellung der für die betreffende Düse bestimmten Farbkonzentration erforderlichen Verhältnis verbunden ist.

10. Aufzeichnungseinrichtung nach Anspruch 8 oder 9, dadurch gekennzeichnet, daß am Mischraum (37) eine elektro-optische Meßeinrichtung (44, 45) für die Konzentration der im Mischraum befindlichen Farblösung zur Steuerung der Dosierpumpe (38) für die Farbe angeordnet ist.

11. Aufzeichnungseinrichtung nach Anspruch 9, dadurch gekennzeichnet, daß am Mischraum (37) eine Druckmeßeinrichtung (48) zur Steuerung der Dosierpumpe (39) für das Farblösungsmittel angeordnet ist.

12. Aufzeichnungseinrichtung nach einem der Ansprüche 2 bis 4, dadurch gekennzeichnet, daß die Aufzeichnungselemente von mindestens zwei in Bewegungsrichtung (A) hintereinander liegenden elektrografischen Schreibeinrichtungen (67, 68) gebildet werden, welche jeweils an einen anderen Farbvorrat (37) angeschlossen und mittels je einer Reihe von mit einer Steuereinrichtung verbundenen, stiftförmigen Steuerelektroden (168) steuerbar sind.

13. Aufzeichnungseinrichtung nach Anspruch 12, dadurch gekennzeichnet, daß die Steuerstifte (168) den Farbauftrag von zu beiden Seiten der Steuerstifte angeordneten Zu- und Abführdüsen (67, 68) für elektrophoretischen Entwickler steuern.

14. Aufzeichnungseinrichtung nach einem der Ansprüche 2 bis 4, dadurch gekennzeichnet, daß die Aufzeichnungselemente von je einer Reihe von in Bewegungsrichtung (A) hintereinander liegenden Thermodruckköpfen (74) gebildet werden, welche mit je einem Farbband (79) zusammenarbeiten.

15. Aufzeichnungseinrichtung nach Anspruch 14, dadurch gekennzeichnet, daß jede Reihe von Thermodruckköpfen (74) mit verschieden großem Energieeinsatz betrieben wird.

16. Aufzeichnungseinrichtung nach Anspruch 14, dadurch gekennzeichnet, daß jedes der Farbbänder (79) verschieden dicht mit Farbe belegt ist.

CW 2655.1 PB/MB

17. Aufzeichnungseinrichtung nach einem der Ansprüche 2 bis 4, dadurch gekennzeichnet, daß die Aufzeichnungselemente von in Bewegungsrichtung (A) hintereinander liegenden Schreibnadeln (88) mit verschieden großem Querschnitt gebildet werden.


Hierzu 7 Blatt Zeichnungen

Fig. 1

Fig. 2

| Düsennummer | | 1 | 2 | 3 | 4 | 5 | 6 | 7 | 8 |
|---|---|---|---|---|---|---|---|---|---|
| Rel. Farbdeckung | | $2^7$ | $2^6$ | $2^5$ | $2^4$ | $2^3$ | $2^2$ | $2^1$ | $2^0$ |
| Bildpunktdichte | | | | | | | | | |
| 0 | | 0 | 0 | 0 | 0 | 0 | 0 | 0 | 0 |
| 1 | | 0 | 0 | 0 | 0 | 0 | 0 | 0 | L |
| 2 | | 0 | 0 | 0 | 0 | 0 | 0 | L | 0 |
| 3 | | 0 | 0 | 0 | 0 | 0 | 0 | L | L |
| 4 | | 0 | 0 | 0 | 0 | 0 | L | 0 | 0 |
| 5 | | 0 | 0 | 0 | 0 | 0 | L | 0 | L |
| 6 | | 0 | 0 | 0 | 0 | 0 | L | L | 0 |
| 7 | | 0 | 0 | 0 | 0 | 0 | L | L | L |
| ⋮ | | ⋮ | ⋮ | ⋮ | ⋮ | ⋮ | ⋮ | ⋮ | ⋮ |
| 255 | | L | L | L | L | L | L | L | L |

**Fig. 3A**

| | 1 | 2 | 3 |
|---|---|---|---|
| 1 | 0 | 0 | L |
| 2 | L | 0 | L |
| 3 | 0 | L | 0 |
| 4 | L | L | L |
| 5 | 0 | L | L |
| 6 | 0 | 0 | 0 |
| 7 | L | 0 | 0 |

**Fig. 3B**

| | 1 | 2 | 3 |
|---|---|---|---|
| 1 | 0 | 0 | L |
| 2 | L | 0 | L |
| 3 | 0 | L | 0 |
| 4 | L | L | L |
| 5 | 0 | L | L |
| 6 | 0 | 0 | 0 |
| 7 | L | 0 | 0 |

**Fig. 3C**

| | 1 | 2 | 3 |
|---|---|---|---|
| 1 | 0 | 0 | L |
| 2 | L | 0 | L |
| 3 | 0 | L | 0 |
| 4 | L | L | L |
| 5 | 0 | L | L |
| 6 | 0 | 0 | 0 |
| 7 | L | 0 | 0 |

**Fig. 3D**

| | 1 | 2 | 3 |
|---|---|---|---|
| 1 | 0 | 0 | 0 |
| 2 | 0 | 0 | 0 |
| 3 | 0 | 0 | 0 |
| 4 | 0 | 0 | 0 |
| 5 | 0 | 0 | 0 |
| 6 | 0 | 0 | 0 |
| 7 | L | 0 | 0 |

0073977

Fig. 4

Fig. 5

Fig.6

Fig.7

Fig. 8

Fig. 9